(19) Europäisches Patentamt
European Patent Office
Office européen des brevets

(11) **EP 3 315 795 B1**

(12) **EUROPÄISCHE PATENTSCHRIFT**

(45) Veröffentlichungstag und Bekanntmachung des Hinweises auf die Patenterteilung:
**25.09.2019   Patentblatt 2019/39**

(51) Int Cl.:
***F16B 13/06*** *(2006.01)*

(21) Anmeldenummer: **17195937.2**

(22) Anmeldetag: **11.10.2017**

(54) **SPREIZANKER**

EXPANSION ANCHOR

DISPOSITIF D'ANCRAGE EXPANSIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2016   DE 102016120270**
**13.09.2017   DE 102017121232**

(43) Veröffentlichungstag der Anmeldung:
**02.05.2018   Patentblatt 2018/18**

(73) Patentinhaber: **fischerwerke GmbH & Co. KG**
**72178 Waldachtal (DE)**

(72) Erfinder: **Zhu, Feng**
**72250 Freudenstadt (DE)**

(74) Vertreter: **Suchy, Ulrich Johannes**
**fischerwerke GmbH & Co. KG**
**Gewerbliche Schutzrechte**
**Klaus-Fischer-Strasse 1**
**72178 Waldachtal (DE)**

(56) Entgegenhaltungen:
**EP-A1- 2 604 869**

**Beschreibung**

Die Erfindung betrifft einen Spreizanker mit den Merkmalen des Oberbegriffs des Anspruchs 1.

Spreizanker aus Metall zum Verankern in einem Bohrloch sind für die Befestigung insbesondere für schwere Gegenstände seit langem bekannt. Neben zahlreichen Sondertypen sind Bolzenanker und Hülsenanker die häufigsten Grundtypen dieser Spreizanker. Beiden ist gemeinsam, dass ein konischer Spreizkörper in eine Spreizhülse eingezogen wird. In manchen Fällen wird auch die Spreizhülse auf den Spreizkörper aufgeschoben.

Ein derartiger Spreizanker ist beispielsweise aus der europäischen Patentanmeldung EP2604869A1 bekannt. Der Spreizanker weist einen Schaft mit einem Innengewinde als Lastangriffsmittel zum Befestigen eines Gegenstands mittels einer Schraube auf. Der Spreizanker umfasst eine Konusmutter, die als Spreizkörper zum Aufspreizen der Spreizhülse durch Einziehen des Spreizkörpers in die Spreizhülse wirkt. Die Spreizhülse dieses Spreizankers umfasst einen zylindrischen Grundkörper mit einer ersten Wanddicke. An ihrem in Einbringrichtung in ein Bohrloch vorderen Ende weist die Spreizhülse einen Fortsatz mit reduzierter Wandstärke auf, wobei der Übergang vom Grundkörper zum Fortsatz durch eine Durchmesserstufe gebildet wird.

Wird in der Zugzone eines Gebäudes befestigt, zum Beispiel an der Unterseite einer Geschossdecke aus Stahlbeton, muss mit Rissen im Verankerungsgrund gerechnet werden, die sich durch die Bohrlöcher erstrecken. Bei wechselnder Belastung öffnen und schließen sich die Risse beziehungsweise weiten und verengen sich die Bohrlöcher. Damit ein Spreizanker unter diesen Bedingungen, insbesondere beim Weiten des Bohrlochs, nicht aus dem Bohrloch rutscht, sind derartige Spreizanker so gestaltet, dass sie unter Belastung nachspreizen können. Weitet sich das Bohrloch, so wird der Spreizkörper weiter in die Spreizhülse eingezogen und spreizt diese weiter auf. Damit dies auch noch nach Jahren geschehen kann, muss eine Gleitbeschichtung auf der Innenseite der Spreizhülse und/oder auf der Außenseite des Spreizkonus angeordnet sein. Typischerweise weisen derartige Spreizanker daher einen organischen Lack als Gleitbeschichtung auf, wie dies beispielsweise in der Druckschrift EP0514342 A1 beschrieben ist. Der Lack kann neben der Gleitfunktion auch als Korrosionsschutz dienen, wobei gegebenenfalls zusätzlich eine anorganische Beschichtung als Korrosionsschutz aufgebracht wird. Alternativ ist es, beispielsweise aus der Druckschrift EP0874166 A1, auch bekannt, den Spreizkörper mit einem Schlauch, insbesondere einem Schrumpfschlauch, zu umhüllen. Im Folgenden ist mit einer "Gleitbeschichtung" auch ein derartiger Schlauch gemeint. Die Aufbringung einer Gleitbeschichtung erfordert einen gesonderten Fertigungsschritt und die Sicherstellung einer ausreichenden Schichtdicke auch nach Jahren des Einsatzes einen hohen Aufwand für die Qualitätssicherung.

Aufgabe der Erfindung ist es daher, einen Spreizanker mit einem reduzierten Herstellungsaufwand zu schaffen, der dennoch in der Zugzone einsetzbar ist.

Diese Aufgabe wird erfindungsgemäß durch die Merkmale des Anspruchs 1 gelöst. Die Erfindung schlägt einen Spreizanker aus Metall zum Verankern in einem Bohrloch in einem Verankerungsgrund vor, um einen Gegenstand an dem Verankerungsgrund befestigen zu können. Als "Spreizanker" werden hier insbesondere und bevorzugt sowohl Hülsenanker als auch Bolzenanker verstanden. Der Verankerungsgrund ist insbesondere ein Vollbaustoff und insbesondere aus Beton.

Der Spreizanker weist einen Schaft mit einem Lastangriffsmittel auf. Ein Lastangriffsmittel ist insbesondere ein Außengewinde, kann aber beispielsweise auch ein Innengewinde oder ein nagelartiger Kopf sein.

Weiterhin weist der Spreizanker einen Spreizkörper auf. Dieser Spreizkörper kann sowohl einstückig mit dem Schaft sein, wie es bei Bolzenankern der Fall ist, oder ein separates Teil sein, wie es bei Hülsenankern in Form einer Konusmutter mit Innengewinde der Fall ist. Der Spreizkörper erweitert sich konisch mit einem ersten Konuswinkel Ws in Einbringrichtung bis zu einem maximalen Durchmesser D. Mit der "Einbringrichtung" ist die Richtung gemeint ist, mit der der Spreizanker planmäßig in ein Bohrloch eingebracht wird. "Konisch" meint hier nicht nur eine streng mathematisch kegelstumpfförmige Gestalt sondern umfasst auch nicht kreisförmige Querschnitte und eine nicht-lineare Erweiterung. Entsprechend kann der Winkel zur Längsachse entlang dem Spreizkörper variieren. Mit dem "ersten Konuswinkel" ist hier bei variierendem Winkel der durchschnittliche Winkel der konischen Außenfläche zur Längsachse des Spreizankers gemeint. Dementsprechend ist bei einem kegelstumpfförmigen Spreizkörper der eingeschlossene Kegelwinkel doppelt so groß wie der erste Konuswinkel.

Mit dem Spreizkörper ist eine Spreizhülse des Spreizankers durch Relativverschiebung aufspreizbar. Unter "Relativverschiebung" ist insbesondere ein Einziehen des Spreizkörpers in die Spreizhülse gemeint, wobei die Spreizhülse planmäßig im Wesentlich ortsfest zum umgebenden Bohrloch bleibt. Möglich ist aber auch ein Aufschieben der Spreizhülse auf den Spreizkörper, wobei sich die Spreizhülse relativ zum umgebenden Bohrloch bewegt. Auch eine Kombination von Einziehen und Aufschieben ist erfindungsgemäß möglich. Die Spreizhülse hat einen im Wesentlichen zylindrischen Grundkörper und an ihrem in Einbringrichtung vorderen Ende einen Fortsatz. Der Fortsatz erstreckt sich insbesondere im Wesentlichen über den gesamten Umfang der Spreizhülse. Die Spreizhülse braucht dabei nicht über den gesamten Umfang geschlossen sein, sondern kann auch Schlitzungen aufweisen, die sich über einen Teil oder die gesamte Länge erstrecken und somit die Fertigung als Stanzbiegeteil ermöglichen und/oder der Ausbildung mehrerer Spreizzungen dienen. Bevorzugt ist, dass die Spreizhülse durch mehrere zur Längsachse des Spreizankers parallele Schlitze in Segmente unterteilt ist, wobei die Schlitze sich im Wesentlichen nicht in Einbringrichtung erweitern. Insbesondere weist der Grundkörper einen näherungsweise kreisrunden Querschnitt auf.

Im Bereich des Grundkörpers weist die Spreizhülse eine erste Wanddicke $t_G$ auf und im Bereich des Fortsatzes eine kleinere zweite Wanddicke $t_F$. Bei variierender Wanddicke des Grundkörpers ist mit der erste Wanddicke $t_G$ die durchschnittliche Wanddicke in diesem Bereich gemeint. Ebenso ist bei variierender Wanddicke des Fortsatzes mit der zweiten Wanddicke $t_F$ die durchschnittliche Wanddicke in diesem Bereich gemeint. Die Länge des Fortsatzes, gemessen parallel zur Längsachse des Spreizankers, ist gering gegenüber dem Grundkörper. Insbesondere beträgt die Länge maximal 20 Prozent des Durchmessers D. Der Fortsatz funktioniert als eine Art Schlitten während des Verspreizens der Spreizhülse.

Vorzugsweise ist die Innenseite des Fortsatzes geneigt zur Längsachse des Spreizankers, erweitert sich also konisch mit einem zweiten Konuswinkel $W_F$, wobei hier "konisch" wiederum nicht streng-mathematisch kegelstumpfförmig meint. Insbesondere entspricht der zweite Konuswinkel $W_F$ des Fortsatzes im Wesentlichen dem ersten Konuswinkel $W_S$ des Spreizkörpers.

Bevorzugt weist der Fortsatz eine zur Innenseite im Wesentlichen parallele Außenseite auf.

Durch die vorstehend genannten bevorzugten Merkmale des Fortsatzes, und insbesondere durch deren Kombination, kann die Spreizhülse mit dem Fortsatz als eine Art Schlitten besonders gut auf dem Spreizkörper gleiten.

Der Übergang von Grundkörper zum Fortsatz ist erfindungsgemäß durch eine Durchmesserstufe auf der Außenseite gebildet. Die Durchmesserstufe definiert also den Übergang vom Grundkörper zum Fortsatz. Durch diese Durchmesserstufe ergibt sich einerseits eine Funktionstrennung zwischen dem Grundkörper, durch dessen flächige Anlage es zur gleichmäßigen Verteilung der Spreizkräfte kommt, und dem Fortsatz, der beim Verspreizen das Gleiten auf dem Spreizkörper begünstigt. Andererseits kann der Fortsatz durch Pressen eines Blechs an der entsprechenden Stelle hergestellt werden. Durch die Dickenreduzierung wird das Blech im Bereich des Fortsatzes verfestigt, womit eine steigende Härte einhergeht. Dadurch kann der Fortsatz besonders gut in die Bohrlochwand eindringen, was für den Verspreizvorgang vorteilhaft ist. Die Durchmesserstufe ist insbesondere nicht angefast und bildet eine Kante, die im Wesentlichen senkrecht zur Längsachse des Spreizankers steht. Die Durchmesserstufe kann sich aber auch über einen Bereich entlang der Längserstreckung der Spreizhülse erstrecken. Sind entlang der Längserstreckung der Spreizhülse mehrere Stufen auf der Außenseite angeordnet und ist die Innenseite des Fortsatzes geneigt zur Längsachse des Spreizankers, so ist mit der "Durchmesserstufe" hier diejenige Stufe gemeint, die dem Übergang zwischen dem zylindrischem Grundkörper und der konischen Innenseite am nächsten ist. Ansonsten ist mit der "Durchmesserstufe" hier die vorderste Stufe gemeint.

Der erfindungsgemäße Spreizanker ist dadurch gekennzeichnet, dass er keine Gleitbeschichtung aufweist. Mit einer "Gleitbeschichtung" ist hier eine Beschichtung auf organischer Basis, insbesondere ein Lack, oder, wie bereits erwähnt, ein umhüllender Schlauch, gemeint. Nicht dagegen ist mit einer "Gleitbeschichtung" eine anorganische Beschichtung, insbesondere eine Feuerverzinkung oder eine galvanische Verzinkung gemeint. Eine solche anorganische Beschichtung ist insbesondere bei erfindungsgemäßen Spreizankern aus Nicht-Edelstahl als Korrosionsschutz vorgesehen. Bei Spreizankern aus Edelstahl wird vorzugsweise die Spreizhülse und/oder der Spreizkörper aus Edelstahl hergestellt und die Oberfläche gehärtet und zwar insbesondere durch Anreicherung von Kohlenstoff und/oder Stickstoff in der Oberfläche bei Temperaturen von unter 300 Grad Celsius. Eine derartige Anreicherung mit Kohlenstoff wird auch als "Kolsterisieren" bezeichnet.

Erfindungsgemäß weist der Anker außerdem folgende geometrische Verhältnisse auf:
Für die erste Wanddicke ($t_G$) des Grundkörpers gilt:

$$0{,}08 * D + 0{,}20 \text{ mm} \leq t_G \leq 0{,}13 * D + 0{,}25 \text{ mm}$$

und für die zweite Wanddicke ($t_F$) des Fortsatzes gilt:

$$0{,}26 * t_G + 0{,}03 \text{ mm} \leq t_F \leq 0{,}60 * t_G + 0{,}30 \text{ mm}$$

und für den ersten Konuswinkel ($W_S$) des Spreizkörpers gilt:

$$0{,}11° * D/\text{mm} + 8{,}83° \leq W_S \leq 0{,}17° * D/\text{mm} + 11{,}50°$$

Überraschend wurde festgestellt, dass bei Einhaltung dieser geometrischen Parameter, ein derartiger Spreizanker auch ohne Gleitbeschichtung sicher nachspreizt. Hierdurch können erhebliche Aufwände zur Beschichtung und darüber hinaus eine mögliche Fehlerquelle vermieden werden.

Vorzugsweise weist der Grundkörper im Bereich der Durchmesserstufe im Wesentlichen die erste Wanddicke $t_G$ und der Fortsatz im Wesentlichen die zweite Wanddicke $t_F$ auf. Insbesondere ist die Wanddicke des Grundkörpers und die Wanddicke des Fortsatzes jeweils im Wesentlichen konstant. "Im Wesentlichen" schließt hier Abweichungen von je 10 Prozent in beide Richtungen ein.

Die Spreizhülse kann Nasen aufweisen, was insbesondere bei einem Bolzenanker von Vorteil ist, damit die Spreizhülse am Anfang der Verspreizung Halt an der Bohrlochwand findet. Mit einer "Nase" ist hier ein lokal begrenzter Vorsprung gemeint. Allerdings kann sich eine Nase negativ auf die Lastverteilung auswirken, weshalb sie vorzugsweise einen Abstand vom in Einbringrichtung vorderen Ende der Spreizhülse von mindestens 0,5 * D, insbesondere von mindestens 1,0 * D, hat. Insbesondere ist die Nase am in Einbringrichtung hinteren Ende der Spreizhülse angeordnet. Außerdem beträgt ihr radialer Überstand maximal 0,5 * $t_G$, insbesondere maximal 0,25 * $t_G$.

Als "Hülsenanker" werden hier Anker mit einer Gewindestange als Schaft verstanden, auf die eine Konusmutter als Spreizkörper, eine Spreizhülse, eine Distanzhülse und eine Mutter aufgeschraubt beziehungsweise aufgeschoben sind. als "Bolzenanker" werden hier Anker verstanden, bei denen der Spreizkörper einstückig oder jedenfalls unbeweglich verbunden mit einem Schaft ist. Im Bereich eines Halses, der an den Spreizkörper angrenzt, ist der Schaft von einer längsbeweglichen Speizhülse umfasst.

Die Erfindung wird nachfolgend anhand eines Ausführungsbeispiels dargestellt.

Es zeigen:

Figur 1    den erfindungsgemäßen Spreizanker als Teil einer Befestigungsanordnung in einer perspektivischen Schnittdarstellung;

Figur 2    die Spreizhülse desselben Spreizankers in einer Seitenansicht;

Figur 3    ein Detail gemäß Kreis III aus Figur 2 in einer Schnittdarstellung; und

Figur 4    der Spreizkörper desselben Spreizankers in einer Schnittdarstellung.

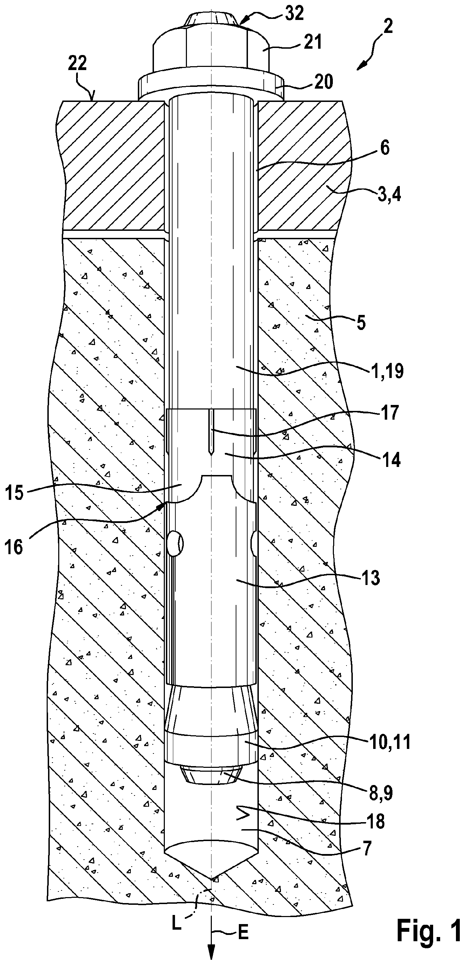

Der in den Figuren dargestellte erfindungsgemäße Spreizanker 1 ist als Hülsenanker ausgeführt und Teil einer Befestigungsanordnung 2, bei der ein Gegenstand 3, hier eine Flanschplatte 4, an einem Verankerungsgrund 5 aus Beton befestigt wird. Dazu wird zunächst der Gegenstand 3 auf den Verankerungsgrund 5 aufgesetzt und durch eine im Gegenstand 3 vorhandene Bohrung 6 hindurch ein Bohrloch 7 im Verankerungsgrund 5 erstellt. Durch die Bohrung 6 hindurch wird der Spreizanker 1 in das Bohrloch 7 gesteckt. Dieser Zustand ist in Figur 1 dargestellt. Anschließend wird der Spreizanker 1 angezogen, worauf im Weiteren noch eingegangen wird.

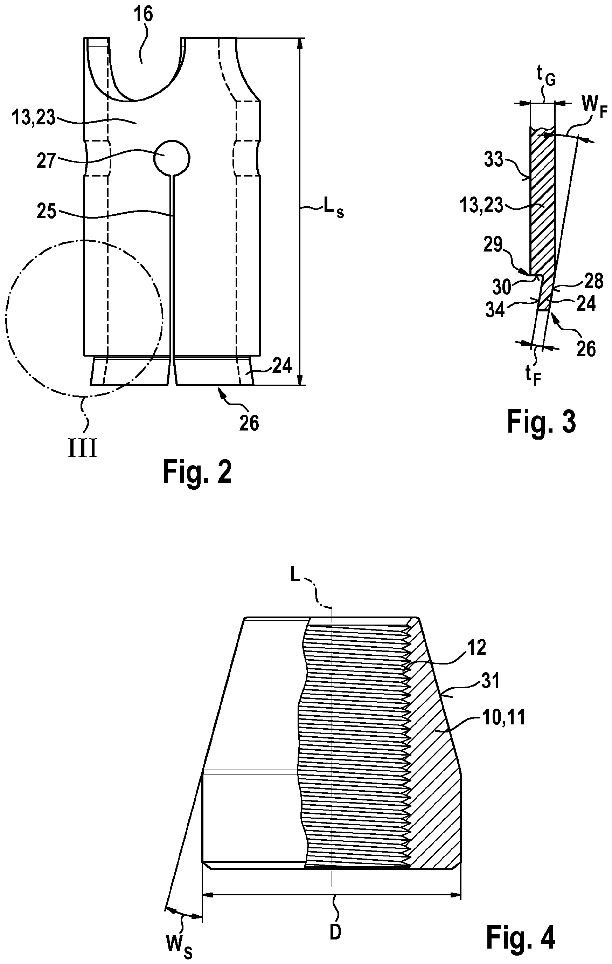

Der Spreizanker 1 weist einen Schaft 8 in Form einer Gewindestange 9 auf, die sich über die gesamte Länge des Spreizankers 1 erstreckt. Das Gewinde der Gewindestange 9 dient als Lastangriffsmittel 32. In Einbringrichtung E des Spreizankers 1 ganz vorne ist eine Konusmutter 10 als Spreizkörper 11 aufgeschraubt. Dazu weist die Konusmutter 10 ein Innengewinde 12 auf, wie in Figur 4 zu erkennen ist. Entgegen der Einbringrichtung E schließt sich hinten an die Konusmutter 10 eine Spreizhülse 13 an. "Vorne" und "hinten" ist hier stets auf die Einbringrichtung E bezogen. "Axial" meint hier parallel zu einer Längsachse L des Spreizankers, "radial" senkrecht hierzu. Auf die Spreizhülse 13 und die Konusmutter 10 wird im Weiteren noch genauer eingegangen. An die Spreizhülse 13 schließt sich hinten eine Ausgleichshülse 14 an, die im Gegensatz zu allen anderen Bauteilen des Spreizankers 1 nicht aus Stahl, sondern aus Kunststoff gefertigt ist. Die Ausgleichshülse 14 wird in an sich bekannter Weise in der letzten Phase der Verankerung in Richtung der Längsachse L des Spreizankers 1 gestaucht, während der Gegenstand 3 an den Verankerungsgrund 5 gezogen wird. Die Ausgleichshülse 14 weist nach vorne stehende Zungen 15 auf, die in komplementäre Ausnehmungen 16 der Spreizhülse 13 eingreifen und so eine Verdrehung der Spreizhülse 13 gegenüber der Ausgleichshülse 14 vermeiden. Außerdem weist die Ausgleichshülse 14 radial nach außen stehende Längsrippen 17 auf, die an einer Bohrlochinnenwand 18 des Bohrlochs 7 anliegen und dadurch eine Verdrehung der Spreizhülse 13 im Bohrloch 7 vermeiden. An die Ausgleichshülse 14 schließt sich hinten eine rohrförmige Distanzhülse 19 und hieran eine Unterlegscheibe 20 sowie eine Mutter 21 an. Die Mutter 21 stützt sich über die Unterlegscheibe 20 an einer Außenseite 22 des Gegenstands 3 ab. Die Spreizhülse 13, die Ausgleichshülse 14 und die Distanzhülse 19 sind innen jeweils zylindrisch mit einem Innendurchmesser, der etwas größer als der Außendurchmesser der Gewindestange 9 ist, so dass diese Elemente parallel zur Längsachse L des Spreizankers 1 verschiebbar gegenüber dem Schaft 8 sind.

Das Anziehen des Spreizankers 1 erfolgt durch Drehen der Mutter 21. Dies bewirkt eine Zugbewegung auf die Gewindestange 9 entgegen der Einbringrichtung E, die auf den Spreizkörper 11 übertragen wird. Hierdurch wird der Spreizkörper 11 nach hinten in Richtung der Spreizhülse 13 gezogen. Da die Spreizhülse 13 sich axial über die Ausgleichshülse 14 und die Distanzhülse 15 an der Unterlegscheibe 20 und somit an der Mutter 21 abstützt, wird der Spreizkörper 11 in die Spreizhülse 13 eingezogen und die Spreizhülse 13 radial verspreizt. Das Einziehen kann auch als Relativverschiebung zwischen Spreizhülse 13 und Spreizkörper 11 aufgefasst werden. Sie bleibt dabei im Wesentlichen ortsfest im Bohrloch 7 und bewirkt eine vor allem auf Reibung basierende Verankerung. Bei einer Rissbildung im Bereich des Bohrlochs 7 kommt es zu einer Aufweitung des Bohrlochs 7. Sofern der Spreizanker 1 auf Zug belastet ist, beispielsweise durch eine auf die Flanschplatte 4 wirkende Nutzlast, wird der Spreizkörper 11 weiter in die Spreizhülse 13 eingezogen und die Spreizhülse 13 noch mehr verspreizt. Dies wird als "Nachspreizen" bezeichnet.

Das Verspreizen und Nachspreizen wird durch die Detailgeometrie der Spreizhülse 13 und der Konusmutter 10 begünstigt. Wie in den Figuren 2 und 3 dargestellt weist die Spreizhülse 13 einen zylindrischen Grundkörper 23 und in Einbringrichtung nach vorne vom Grundkörper 23 abstehend einen Fortsatz 24 auf. Sowohl der Grundkörper 23 als auch der Fortsatz 24 erstrecken sich über den gesamten Umfang, einzig unterbrochen durch vier über den Umfang gleichmäßig verteilte Schlitze 25, die sich vom vorderen Ende 26 der Spreizhülse 13 über etwa 70 Prozent der Länge $L_S$ der Spreizhülse 13 parallel zur Längsachse L des Spreizankers 1 erstrecken und jeweils in einer kreisförmigen Öffnung 27 enden. Die Schlitze 25 unterteilen die Spreizhülse 13 in einzelne Segmente und erleichtern dadurch die radiale Verspreizung. Die Wanddicke des Grundkörpers 23 ist über Umfang und Länge konstant und somit gleichzeitig die durchschnittliche erste Wanddicke $t_G$. Ebenso ist die Wanddicke des Fortsatzes 24 über Umfang und Länge konstant und somit gleichzeitig die durchschnittliche zweite Wanddicke $t_F$. Eine Innenseite 28 des Fortsatzes steht somit parallel zu einer Außenseite 34 des Fortsatzes 24. Der Fortsatz 24 steht schräg nach vorne, also mit axialem und radialem Anteil, ab mit einem zweiten Konuswinkel $W_F$ des Fortsatzes 24 auf der Innenseite 28, so dass der Fortsatz 24 insgesamt eine konische Innenseite 28 bildet. Der Fortsatz 24 ist durch Umformen ausgehend von einer Dicke gebildet, die der durchschnittliche erste Wanddicke $t_G$ des Grundkörpers 23 entspricht. Da die durchschnittliche zweite Wanddicke $t_F$ des Fortsatzes deutlich geringer ist, kommt es beim Umformen zu einer erheblichen Steigerung der Festigkeit und Härte. Das vordere Ende 26 der Spreizhülse 13 kann sich dadurch besonders gut in die Bohrlochinnenwand 18 einschneiden. Dies erfolgt zwar nur in sehr geringem Maße und ist für den fertig verspreizten Spreizanker 1 von geringerer Bedeutung, bewirkt aber zu Beginn der Verspreizung, dass die Spreizhülse 13 nicht unbeabsichtigt entlang der Bohrlochinnenwand 18 verschoben wird. Der Übergang vom Grundkörper 23 zum Fortsatz 24 ist durch eine Durchmesserstufe 29 auf einer Außenseite 33 der Spreizhülse 13 gebildet. Die Durchmesserstufe 29 schließt mit dem Grundkörper 23 einen 90°-Winkel ein und bildet dadurch eine Stirnfläche 30, die senkrecht zur Längsachse L des Spreizankers 1 steht. Der Fortsatz 24 bildet eine Art "Schlitten", mit dem die Spreizhülse 13 auf dem Spreizkörper 11 gleitet.

Die den Spreizkörper 11 bildende Konusmutter 10 weist, wie bereits erwähnt, ein Innengewinde 12 auf, das die Konusmutter 10 durchsetzt. Vorne ist die Konusmutter im Wesentlichen zylindrisch und bildet den maximalen Durchmesser D des Spreizkörpers 11. Der maximale Durchmesser D bildet gleichzeitig den Nenndurchmesser des Spreizankers 1. Nach hinten verringert sich der Durchmesser konisch in Form eines Kegelstumpfes. Die derart gebildete Spreizfläche 31 schließt mit der Längsachse L des Spreizankers 1 einen ersten Konuswinkel $W_S$ des Spreizkörpers 11 ein, der dem zweiten Konuswinkel $W_F$ des Fortsatzes 24 entspricht.

Folgenden Tabellen geben die Maße für das Ausführungsbeispiel in unterschiedlichen Größen. Zu den Maßen sind jeweils Maßtoleranzen angegeben. Allerdings können die zweite Wanddicke $t_F$ des Fortsatzes 24 und die erste Wanddicke $t_G$ des Grundkörpers 23 sowie der erste Konuswinkel $W_S$ des Spreizkörpers 11 nicht beliebig gewählt werden, sondern es müssen die in den beiden unteren Zeilen angegebenen Verhältnisse zusätzlich beachtet werden.

| D | [mm] | 10 | 12 | 15 | 16 |
|---|---|---|---|---|---|
| $t_G$ | [mm] | 1,30 ±0,28 | 1,50 ±0,33 | 1,80 ±0,40 | 1,90 ±0,43 |
| $t_F$ | [mm] | 1,10 ±0,81 | 1,45 ±1,06 | 2,06 ±1,51 | 2,29 ±1,67 |
| $W_F=W_S$ | [°] | 11,57 ±1,64 | 11,85 ±1,70 | 12,27 ±1,79 | 12,41 ±1,82 |
| $L_S$ | [mm] | 25,20 ±0,20 | 30,10 ±0,30 | 35,80 ±0,40 | 37,40 ±0,40 |
| $t_G$ / D | [-] | 0,13 ±0,03 | 0,12 ±0,03 | 0,12 ±0,03 | 0,12 ±0,03 |
| $t_F$ / $t_G$ | [-] | 0,76 ±0,47 | 0,86 ±0,53 | 1,01 ±0,61 | 1,06 ±0,64 |

| D | [mm] | 18 | 20 | 24 |
|---|---|---|---|---|
| $t_G$ | [mm] | 2,10 ±0,48 | 2,30 ±0,53 | 2,70 ±0,63 |
| $t_F$ | [mm] | 2,78 ±2,03 | 3,31 ±2,42 | 4,53 ±3,30 |
| $W_F$ | [°] | 12,69 ±1,88 | 12,97 ±1,94 | 13,53 ±2,06 |
| $L_S$ | [mm] | 41,10 ±0,40 | 42,10 ±0,40 | 46,25 ±0,25 |

(fortgesetzt)

| D | [mm] | 18 | 20 | 24 |
|---|---|---|---|---|
| $t_G / D$ | [-] | 0,12 ±0,03 | 0,12 ±0,03 | 0,11 ±0,03 |
| $t_F / t_G$ | [-] | 1,16 ±0,70 | 1,25 ±0,76 | 1,45 ±0,87 |

Durch diese Maße wird ein zuverlässiges Nachspreizen sichergestellt. Insbesondere wird das für die europäische Zulassung des Spreizankers 1 notwendige Kriterium erfüllt, dass die Haltewerte bei einem 0,5 mm-Riss nicht mehr als 30 Prozent gegenüber einem 0,3 mm-Riss abfallen. Darüber hinaus bleiben die für die sichere Verankerung notwendigen Drehmomente so niedrig, dass einerseits das Anziehen bedienerfreundlich bleibt und andererseits die Vorspannung im Anker nicht zu groß wird, was bei einer zusätzlichen Belastung zum Versagen innerhalb des Ankers führen könnte.

Die Konusmutter 10 ist aus einem Stahl mit der Werkstoffnummer 1.0718 (11SMnPb30; Norm: EN 10277-3-2008) durch Stanzbiegen hergestellt, während die Spreizhülse 23 aus einem Stahl mit der Werkstoffnummer 1.0347 (DC03; Norm: EN 10130-2006) oder 1.0037 (St 37-2; Norm: EN 10027-2) gefertigt ist.

Alternativ kann dieser Stahl durch einen Edelstahl ersetzt werden, wobei die Spreizhülse 23 und/oder der Spreizkörper 11 durch Kolsterisieren gehärtet sind.

Bezugszeichenliste

Spreizanker

1 Spreizanker
2 Befestigungsanordnung
3 Gegenstand
4 Flanschplatte
5 Verankerungsgrund
6 Bohrung im Gegenstand 3
7 Bohrloch im Verankerungsgrund 5
8 Schaft
9 Gewindestange
10 Konusmutter
11 Spreizkörper
12 Innengewinde der Konusmutter 10
13 Spreizhülse
14 Ausgleichshülse
15 Zunge der Ausgleichshülse 14
16 Ausnehmung der Spreizhülse 13
17 Längsrippe der Ausgleichshülse 14
18 Bohrlochinnenwand
19 Distanzhülse
20 Unterlegscheibe
21 Mutter
22 Außenseite des Gegenstands 3
23 Grundkörper der Spreizhülse 13
24 Fortsatz der Spreizhülse 13
25 Schlitz
26 vorderes Ende der Spreizhülse 13
27 Öffnung
28 Innenseite des Fortsatzes 24
29 Durchmesserstufe
30 Stirnfläche an der Durchmesserstufe 29
31 Spreizfläche des Spreizkörpers 11
32 Lastangriffsmittel

33     Außenseite der Spreizhülse 13
34     Außenseite des Fortsatzes 24
D     maximaler Durchmesser des Spreizkörpers 11
E     Einbringrichtung des Spreizankers 1
L     Längsachse des Spreizankers 1
$L_S$     Länge der Spreizhülse 13
$t_F$     durchschnittliche zweite Wanddicke des Fortsatzes 24
$t_G$     durchschnittliche erste Wanddicke des Grundkörpers 23
$W_F$     zweiter Konuswinkel des Fortsatzes 24 auf der Innenseite
$W_S$     erster Konuswinkel des Spreizkörpers 11

**Patentansprüche**

**1.** Spreizanker (1) aus Metall zum Verankern in einem Bohrloch (7) in einem Verankerungsgrund (5), insbesondere aus Beton, zum Befestigen eines Gegenstandes (3) mit

- einem Schaft (8) mit einem Lastangriffsmittel (32),
- einem Spreizkörper (11), der sich konisch mit einem ersten Konuswinkel ($W_S$) in Einbringrichtung (E) bis zu einem maximalen Durchmesser (D) erweitert, und
- mit einer Spreizhülse (13), die durch Relativverschiebung des Spreizkörpers (11) aufspreizbar ist, und die
- einen im Wesentlichen zylindrischen Grundkörper (23) mit einer ersten Wanddicke ($t_G$) und
- an ihrem in Einbringrichtung (E) vorderen Ende (26) einen Fortsatz (24) mit einer kleineren zweiten Wanddicke ($t_F$) aufweist,
- wobei der Übergang vom Grundköper (23) zum Fortsatz (24) durch eine Durchmesserstufe (29) auf der Außenseite (33) gebildet wird,

**dadurch gekennzeichnet, dass**

- weder der Spreizkörper (11) noch die Spreizhülse (13) eine Gleitbeschichtung aufweist
- und für die erste Wanddicke ($t_G$) des Grundkörpers gilt:
$$0{,}08 * D + 0{,}20\ \text{mm} \leq t_G \leq 0{,}13 * D + 0{,}25\ \text{mm}$$
- und für die zweite Wanddicke ($t_F$) des Fortsatzes gilt:
$$0{,}26 * t_G + 0{,}03\ \text{mm} \leq t_F \leq 0{,}60 * t_G + 0{,}30\ \text{mm}$$
- und für den ersten Konuswinkel ($W_S$) des Spreizkörpers gilt:
$$0{,}11° * D/\text{mm} + 8{,}83° \leq W_S \leq 0{,}17° * D/\text{mm} + 11{,}50°$$

**2.** Spreizanker nach Anspruch 1, **dadurch gekennzeichnet, dass** im Bereich der Durchmesserstufe (29) der Grundkörper (23) die erste Wanddicke ($t_G$) und der Fortsatz (24) die zweite Wanddicke ($t_F$) aufweist.

**3.** Spreizanker nach Anspruch 1 oder 2, **dadurch gekennzeichnet, dass** der Fortsatz (24) eine Innenseite (28) aufweist, die sich konisch mit einem zweiten Konuswinkel ($W_F$) in Einbringrichtung (E) erweitert.

**4.** Spreizanker nach Anspruch 3, **dadurch gekennzeichnet, dass** der zweite Konuswinkel ($W_F$) des Fortsatzes (24) im Wesentlichen dem ersten Konuswinkel ($W_S$) des Spreizkörpers (11) entspricht.

**5.** Spreizanker nach einem der vorstehenden Ansprüche, **dadurch gekennzeichnet, dass** der Fortsatz (24) eine zur Innenseite (28) im Wesentlichen parallele Außenseite (34) aufweist.

**6.** Spreizanker nach einem der vorstehenden Ansprüche, **dadurch gekennzeichnet, dass** die Spreizhülse (13) durch mehrere zur Längsachse (L) des Spreizankers (1) parallele Schlitze (25) in Segmente unterteilt ist, wobei die Schlitze (25) sich im Wesentlichen nicht in Einbringrichtung (E) erweitern.

**7.** Spreizanker nach einem der vorstehenden Ansprüche, **dadurch gekennzeichnet, dass** der Spreizanker (1) ein Hülsenanker ist.

**8.** Spreizanker nach einem Ansprüche 1 bis 6, **dadurch gekennzeichnet, dass** der Spreizanker ein Bolzenanker ist.

9. Spreizanker nach einem der vorstehenden Ansprüche, **dadurch gekennzeichnet, dass** die Spreizhülse (13) und/oder der Spreizkörper (11) aus Edelstahl und die Oberfläche gehärtet ist, insbesondere durch Anreicherung von Kohlenstoff und/oder Stickstoff in der Oberfläche bei Temperaturen von unter 300 Grad Celsius.

**Claims**

1. Expansible anchor (1) made of metal for anchoring in a drilled hole (7) in an anchoring substrate (5), especially made of concrete, for fixing an article (3), having

   - a shank (8) having a load-application means (32),
   - an expander body (11) which widens conically in the direction of introduction (E) at a first cone angle ($W_s$) up to a maximum diameter (D), and
   - with an expansion sleeve (13) which is expansible by relative displacement of the expander body (11), and which
   - has a substantially cylindrical main body (23) having a first wall thickness ($t_G$) and
   - at its end (26) that is at the front in the direction of introduction (E) a continuation piece (24) having a smaller second wall thickness ($t_F$),
   - wherein the transition from the main body (23) to the continuation piece (24) is formed by a diameter step (29) on the outer side (33),

   **characterised in that**

   - neither the expander body (11) nor the expansion sleeve (13) has an anti-friction coating
   - and in respect of the first wall thickness ($t_G$) of the main body the following applies:
   $0.08 * D + 0.20 \text{ mm} \leq t_G \leq 0.13 * D + 0.25 \text{ mm}$
   - and in respect of the second wall thickness ($t_F$) of the continuation piece the following applies:
   $0.26 * t_G + 0.03 \text{ mm} \leq t_F \leq 0.60 * t_G + 0.30 \text{ mm}$
   - and in respect of the first cone angle ($W_s$) of the expander body the following applies:
   $0.11° * D/mm + 8.83° \leq W_s \leq 0.17° * D/mm + 11.50°$.

2. Expansible anchor according to claim 1, **characterised in that** in the region of the diameter step (29) the main body (23) has the first wall thickness ($t_G$) and the continuation piece (24) has the second wall thickness ($t_F$).

3. Expansible anchor according to claim 1 or 2, **characterised in that** the continuation piece (24) has an inner side (28) which widens conically in the direction of introduction (E) at a second cone angle ($W_F$).

4. Expansible anchor according to claim 3, **characterised in that** the second cone angle ($W_F$) of the continuation piece (24) substantially corresponds to the first cone angle ($W_s$) of the expander body (11).

5. Expansible anchor according to any one of the preceding claims, **characterised in that** the continuation piece (24) has an outer side (34) that is substantially parallel to the inner side (28).

6. Expansible anchor according to any one of the preceding claims, **characterised in that** the expansion sleeve (13) is divided into segments by a plurality of slots (25) parallel to the longitudinal axis (L) of the expansible anchor (1), which slots (25) do not appreciably widen in the direction of introduction (E).

7. Expansible anchor according to any one of the preceding claims, **characterised in that** the expansible anchor (1) is a sleeve anchor.

8. Expansible anchor according to any one of claims 1 to 6, **characterised in that** the expansible anchor is a bolt anchor.

9. Expansible anchor according to any one of the preceding claims, **characterised in that** the expansion sleeve (13) and/or the expander body (11) have been produced from high-grade steel and the surface has been hardened, especially by increasing the content of carbon and/or nitrogen in the surface at temperatures of below 300 degrees Celsius.

**Revendications**

1. Pièce d'ancrage expansible (1) en métal, destinée à l'ancrage dans un trou (7) foré dans une assise d'ancrage (5) notamment en béton, en vue de la fixation d'un objet (3), comprenant

   - un fût (8) muni d'un moyen (32) d'application de charges,
   - un corps d'écartement (11) s'élargissant tronconiquement suivant un premier angle de conicité (Ws), dans la direction d'insertion (E), jusqu'à un diamètre maximal (D), et
   - une douille expansible (13) qui peut être déployée par déplacement relatif dudit corps d'écartement (11) et qui est pourvue
   - d'un corps de base (23) substantiellement cylindrique, présentant une première épaisseur de paroi ($t_G$) et,
   - à son extrémité (26) située à l'avant dans la direction d'insertion (E), d'un appendice (24) présentant une seconde épaisseur de paroi ($t_F$) plus petite,
   - sachant que la transition, entre ledit corps de base (23) et ledit appendice (24), est formée par un décrochement diamétral (29) sur la face extérieure (33),

   **caractérisée par le fait que**

   - ni le corps d'écartement (11), ni la douille expansible (13), ne comporte un revêtement de glissement
   - et la première épaisseur de paroi ($t_G$) du corps de base obéit à la relation :
   $0,08 * D + 0,20$ mm $\leq t_G \leq 0,13 * D + 0,25$ mm,
   - la seconde épaisseur de paroi ($t_F$) de l'appendice obéissant à la relation :
   $0,26 * t_G + 0,03$ mm $\leq t_F \leq 0,60 * t_G + 0,30$ mm,
   - et le premier angle de conicité ($W_S$) du corps d'écartement obéissant à la relation :
   $0,11° * D/mm + 8,83° \leq W_S \leq 0,17° * D/mm + 11,50°$.

2. Pièce d'ancrage expansible selon la revendication 1, **caractérisée par le fait que** le corps de base (23) présente la première épaisseur de paroi ($t_G$) et l'appendice (24) présente la seconde épaisseur de paroi ($t_F$) dans la région du décrochement diamétral (29).

3. Pièce d'ancrage expansible selon la revendication 1 ou 2, **caractérisée par le fait que** l'appendice (24) est doté d'une face intérieure (28) s'élargissant tronconiquement suivant un second angle de conicité ($W_F$) dans la direction d'insertion (E).

4. Pièce d'ancrage expansible selon la revendication 3, **caractérisée par le fait que** le second angle de conicité ($W_F$) de l'appendice (24) correspond, pour l'essentiel, au premier angle de conicité ($W_S$) du corps d'écartement (11).

5. Pièce d'ancrage expansible selon l'une des revendications précédentes, **caractérisée par le fait que** l'appendice (24) est muni d'une face extérieure (34) substantiellement parallèle à la face intérieure (28).

6. Pièce d'ancrage expansible selon l'une des revendications précédentes, **caractérisée par le fait que** la douille expansible (13) est scindée en des segments, par plusieurs fentes (25) parallèles à l'axe longitudinal (L) de ladite pièce d'ancrage expansible (1), lesquelles fentes (25) ne s'élargissent substantiellement pas dans la direction d'insertion (E).

7. Pièce d'ancrage expansible selon l'une des revendications précédentes, **caractérisée par le fait que** ladite pièce d'ancrage expansible (1) est une ancre à manchon.

8. Pièce d'ancrage expansible selon l'une des revendications 1 à 6, **caractérisée par le fait que** ladite pièce d'ancrage expansible (1) est une ancre à boulon.

9. Pièce d'ancrage expansible selon l'une des revendications précédentes, **caractérisée par le fait que** la douille expansible (13) et/ou le corps d'écartement (11) consiste(nt) en de l'acier fin, et la surface est notamment durcie par apport d'enrichissement en carbone et/ou en azote, dans ladite surface, à des températures inférieures à 300 degrés Celsius.

EP 3 315 795 B1

Fig. 1

Fig. 2

Fig. 3

Fig. 4

## IN DER BESCHREIBUNG AUFGEFÜHRTE DOKUMENTE

**In der Beschreibung aufgeführte Patentdokumente**

- EP 2604869 A1
- EP 0514342 A1
- EP 0874166 A1